# EUROPÄISCHE PATENTSCHRIFT

(11) **EP 1 357 506 B1**
(45) Veröffentlichungstag und Bekanntmachung des Hinweises auf die Patenterteilung: **06.07.2005**
(21) Anmeldenummer: 03008228.3
(22) Anmeldetag: 09.04.2003
(51) Int. Cl.: G06K 7/10

(54) **Verfahren zum Betrieb eines optischen Sensors, insbesondere eines Codelesers und Codeleser**
Method for operating an optical sensor, particularly a code reader and a code reader
Procédé d'utilisation d'un capteur optique, notamment d'un lecteur de code et lecteur de code

(30) Priorität: 25.04.2002 DE 10218452
(43) Veröffentlichungstag der Anmeldung: 29.10.2003
(73) Patentinhaber: SICK AG, 79183 Waldkirch (DE)
(72) Erfinder: Reichenbach, Jürgen, 79312 Emmendingen (DE); Hauser, Peter, 79108 Freiburg (DE); Hafner, Carl Joseph, 79312 Emmendingen (DE); Fillhardt, Christiane, 77746 Schutterwald (DE)
(74) Vertreter: Ludewigt, Christoph

(56) Entgegenhaltungen:
- WO-A-95/07000
- US-A- 5 703 349
- US-A- 5 793 033

## Beschreibung

Die Erfindung betrifft ein Verfahren zum Betrieb eines optischen Sensors gemäß dem Oberbegriff des Anspruchs 1, sowie einen entsprechenden Codeleser.

Mit Codelesern werden Codes, beispielsweise eindimensionale Barcodes oder zweidimensionale Matrixcodes, gelesen, wobei die Codeleser nach verschiedenen Prinzipien arbeiten. Bei Codelesern, die nach dem Scannerprinzip arbeiten, wird der Code gelesen, indem ein Lichtstrahl als sogenannter "Fahrstrahl" über das abzutastende Objekt, beispielsweise ein Etikett mit einem Barcode, bewegt wird. Das vom Objekt reflektierte und/oder remittierte Licht wird von einem Lichtempfänger empfangen und in elektronische Signale umgesetzt. Aus in den elektrischen Signalen enthaltenen Amplitudeninformationen wird die Barcodeinformation abgeleitet.

Zweidimensionale Codes werden zumeist mit Codelesern, die nach dem Kameraprinzip arbeiten, gelesen. Dabei wird das abzutastende Objekt mit einem im Querschnitt linienförmigen Lichtfächer oder einer flächigen Beleuchtung beleuchtet und das von dem beleuchteten Objekt reflektierte und/oder remittierte Licht auf ein ein- oder zweidimensionales Empfängerarray z. B. einen CCD- oder CMOS-Zeilen- oder Matrixsensor, abgebildet. Durch Auswertung der Unterschiede der Empfangsamplituden verschiedener Empfangspixel kann der Code und daraus die Codeinformation erhalten werden.

Aus der US 5,703,349 ist ein mobiler Codeleser bekannt, bei dem die vom Codeleser erfassten Bilder vor der Weiterverarbeitung komprimierbar sind, um sie beispielsweise per Funk schneller übermitteln zu können.

Abhängig von der Qualität der Codes, also ob sie kontrastreich sind, teilweise zerstört oder verschmutzt sind, können Fehllesungen auftreten. Derartige, falsch gelesene Daten werden zumeist gleich gelöscht, da sie nicht weiterverwertbar sind. Eine Fehlerdiagnose ist ohne die fehlerhaften Daten aber erschwert.

Ausgehend von diesem Stand der Technik ist es Aufgabe der Erfindung, ein verbessertes Verfahren zum Betrieb eines optischen Sensors, insbesondere eines Codelesers und einen entsprechenden Codeleser bereitzustellen, bei dem insbesondere eine verbesserte Fehlerdiagnose ermöglicht ist, um mit Kenntnis der Fehlerursachen die Erkennungsrate verbessern zu können.

Diese Aufgabe wird durch ein Verfahren mit den Merkmalen des Anspruchs 1 und einem Codeleser mit den Merkmalen des Anspruchs 12 gelöst.

Erfindungsgemäß ist vorgesehen, dass die von dem Sensor gesehenen Bilder in dem Sensor gelesen werden und entsprechend dem Leseergebnis weiterverarbeitet werden. Auf diese Weise können die korrekt gelesenen Bilder nach dem Lesen, also Dekodieren und nach der Ausgabe der gelesenen Daten, gelöscht und die fehlerhaft gelesenen, also bei denen der Code nicht gelesen werden konnte, komprimiert und abgespeichert werden. Dabei wird nicht die fehlerhafte Information gespeichert sondern das vom Sensor gesehene Bild, das zur fehlerhaften Lesung führte.

Durch den dabei vorgesehenen Einsatz der Bildkompression, die an sich aus der Bildverarbeitung bekannt ist, ergeben sich die wesentlichen Vorteile, dass die komprimierten Bilder nur wenig Speicherplatz benötigen und so mehrere Bilder, die zu Fehllesungen führten, sogenannte NOREAD-Bilder, abgespeichert werden können. Das Vorhandensein einer Serie von NOREAD-Bildern, beispielsweise 20 bis 30, wiederum erlaubt eine effektive Fehlerdiagnose, die letztendlich, wenn die Fehler erkannt wurden und korrigierbar sind, die Erkennungsrate des Sensors verbessert. So kann beispielsweise der Algorithmus zum Lesen der Codes an schwierig zu lesende Codes angepasst werden.

Zwar gehen in der Regel durch eine Bildkompression Informationen verloren. Es hat sich aber herausgestellt, dass für die Fehlerdiagnose der Informationsverlust noch vertretbar ist und die komprimierten Bilder für eine Fehlerdiagnose noch geeignet sind.

Die NOREAD-Bilder können dabei temporär oder dauerhaft in dem Sensor abgespeichert sein, um sie beispielsweise über eine Schnittstelle einer späteren Analyse zuführen zu können. Diese Analyse kann beispielsweise durch einen Vorort-Service oder auch einen Fern-Service über das Internet, realisiert sein.

Grundsätzlich eröffnet ein Einsatz der Bildkompression die Möglichkeit, Referenz-Codes zu speichern, die mit zu lesenden Testcodes verglichen werden können, wodurch Filter optimiert werden können. Des weiteren können Bilddaten der gelesenen Codes schneller und besser über eine bandbegrenzte Schnittstelle zu einer externen Verarbeitungseinheit zu übertragen. Dies ist insbesondere bei Ferndiagnosen über Netzwerke vorteilhaft.

Weiter kann die Erfindung vorteilhaft auch in anderen optischen Sensoren eingesetzt werden, beispielsweise in einem Laserscanner zur Objektvermessung und/oder Objekterkennung, wie er beispielsweise von der Anmelderin unter der Bezeichnung LMS vertrieben wird. Derartige Scanner können beispielsweise eingesetzt werden, um z.B. an Mautstationen Fahrzeuge zu klassifizieren. Auch in dieser Anwendung kann die Möglichkeit der Abspeicherung von fehlgelesenen, komprimierten Bildern die Fehlerdiagnose vereinfachen, wie oben unter Bezugnahme auf einen Codeleser beschrieben.

Die Erfindung ist bei den verschiedensten optischen Sensoren einsetzbar, wie bereits anhand von Codelesern und Laserscannern beschrieben. Es können dabei unterschiedliche Sensortechnologien eingesetzt werden, wie Zeilensensoren, Matrixsensoren in CMOS oder CCD Ausführung.

Die zu verarbeitenden Bilder können Farbbilder, Grauwertbilder oder Binärbilder (schwarz/weiß) bzw. beim genannten LMS auch Abstandsbilder sein, bei welchem die Abstände im Bild als Grauwert oder Farbwert codiert werden können. Sie können über verschiedenste Schnittstellen, z.B. serielle, asynchrone etc., des Sensors und verschiedene Protokolle, insbesondere Ethernet, TCP-IP, ftp, etc., übertragen werden.

Wenn die komprimierten Bilder neben dem zu lesenden Objekt, beispielsweise ein Strichcode oder zweidimensionaler Code, auch eine Umgebung des Objektes enthalten, z.B. eine Weißschulter oder einen Rand, lässt sich eine Fehlerdiagnose verbessert durchführen, weil eine Nichtlesung unter Umständen gerade durch die Umgebung verursacht werden kann und nicht unbedingt von der Codierung selbst herrühren muss.

In Weiterbildung der Erfindung ist vorgesehen, dass bei vollem Speicher zum Speichern des aktuellen, fehlgelesenen, komprimierten Bildes, jeweils das älteste der abgespeicherten Bilder überschrieben wird. Dadurch sind immer die letzten fehlgelesenen Bilder gespeichert, so dass die Fehlerdiagnose immer mit den aktuellsten Bildern durchgeführt werden kann.

Vorteilhafterweise wird als Kompressionsverfahren ein unter der Bezeichnung JPEG oder JPEG 2000 bekanntes Kompressionsverfahren eingesetzt.

In Weiterbildung der Erfindung kann der Kompressionsgrad eingestellt werden kann. Auf diese Weise kann der Kompressionsgrad an die Anforderungen angepasst werden, so dass je nach Anwendung ein möglichst hoher noch zulässiger Kompressionsgrad gewählt werden kann, um letztendlich Speicherplatz zu sparen oder eine Datenübertragung zu beschleunigen.

Dabei ist es besonders vorteilhaft, wenn der Kompressionsgrad in Abhängigkeit bestimmter Parameter, beispielsweise der Decodierbarkeit der komprimierten Bilder oder aufgrund des zu Verfügung stehenden Speichers oder Bandbreite des Übertragungskanals selbsttätig von dem Sensor bestimmt wird.

Es hat sich herausgestellt, dass mit einem Kompressionsgrad von etwa 20 bis 50 gute Ergebnisse erzielbar sind, d.h. es bleiben nach Komprimierung und ggf. Dekomprimierung ausreichend Informationen für eine Fehlerdiagnose erhalten. Ein Kompressionsgrad von 50 reicht oft noch für die visuelle Begutachtung der Bilder aus, sofern ein offensichtlicher Fehler im Druck, ein zerstörtes Codelabel oder sogar das Nichtvorhandensein des Labels für das Noread verantwortlich ist. Sind Details im Codedruck oder in der Umgebung für das Noread verantwortlich, so muss die Kompression geringer gewählt werden, um eine sinnvolle Diagnose zu ermöglichen.

Ein erfindungsgemäßer Codeleser ist gekennzeichnet durch eine Lichtempfangseinrichtung, eine Bilderzeugungseinrichtung, eine Auswerteeinheit zum Lesen des Bildinhalts und einer Bildkompressionseinrichtung sowie einer Fehlerdiagnoseeinrichtung, in der falsch gelesene und komprimierte Bilder auswertbar sind. Alle diese Einrichtungen können in wenigstens einem gemeinsamen Gehäuse integriert sein. In Weiterbildung weist der Codeleser Speichermittel auf zum Speichern der komprimierten Bilder.

Im Folgenden wird die Erfindung an Hand eines Ausführungsbeispiels unter Bezugnahme auf die Zeichnung im Einzelnen erläutert. In der Zeichnung zeigen:
- Fig. 1: eine schematische Darstellung eines erfindungsgemäßen Codelesers;

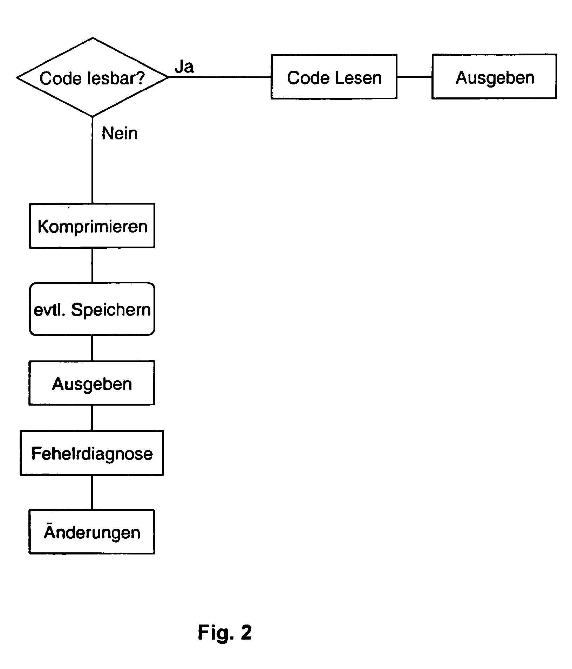

- Fig. 2: ein Flussdiagramm des erfindungsgemäßen Verfahrensablaufs.

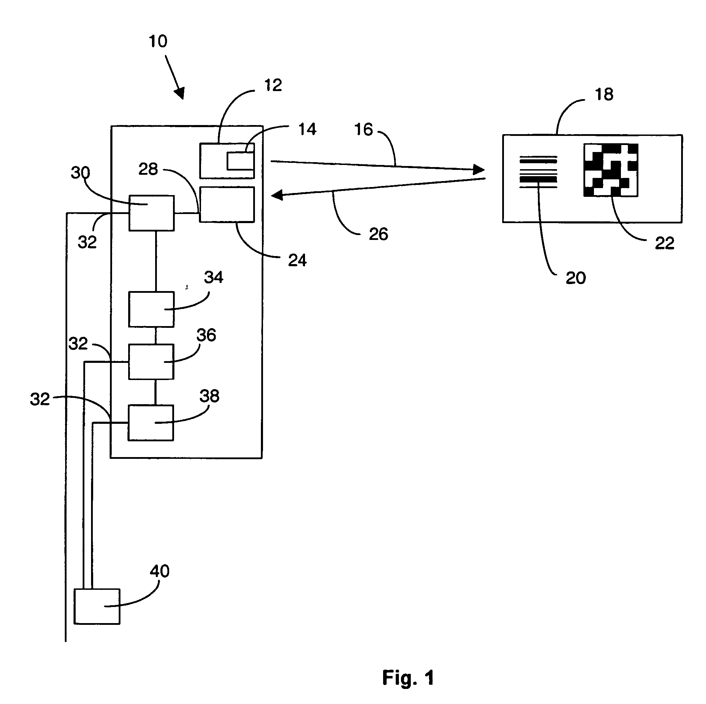

Fig. 1 zeigt einen erfindungsgemäßen Codeleser 10, der einen Lichtsender 12 mit einer Lichtquelle 14 zum Aussenden eines Lichtstrahls 16 aufweist. Mit dem Lichtstrahl 16 wird ein Objekt 18 beleuchtet, das einen Code 20 bzw. 22 trägt. Bei dem Code kann es sich um einen eindimensionalen Barcode, wie er bei dem Bezugszeichen 20 schematisch dargestellt ist oder um einen zweidimensionalen Code, wie er bei dem Bezugszeichen 22 schematisch dargestellt ist, handeln. Andere Codes, beispielsweise Farbcodes sind denkbar. Um mit dem Lichtstrahl 16 den Code 20 oder 22 vollständig zu beleuchten kann der Codeleser 10 eine nicht naher dargestellte Lichtablenkvorrichtung aufweisen, so dass der Lichtstrahl 16 über den Code 20 oder 22 gescannt werden kann.

Der Lichtstrahl 16 kann linienförmig auf das Objekt 18 fokussiert sein, so dass im Falle des eindimensionalen Codes 20 dieser über seine ganze Länge beleuchtet werden kann und im Falle des zweidimensionalen Codes 22, dieser mit dem linienförmigen Lichtstrahl 16 vollständig gescannt werden kann.

Der Codeleser 10 weist weiter einen Lichtempfänger 24 auf, mit dem das vom Objekt 18 reflektierte und/oder remittierte Licht 26 empfangen wird, wozu der Lichtempfänger 24 in der Regel eine geeignete Optik enthält. In dem Lichtempfänger 24 wird das empfangene Licht in ein elektronisches Signal umgewandelt und steht an einem Ausgang 28 zur weiteren Verarbeitung zur Verfügung.

Der Lichtempfänger 24 weist vorzugsweise ein nicht näher dargestelltes eindimensionales Empfängerarray auf, um den beleuchteten Bereich vollständig auf den Empfänger 24 abbilden zu können. Das Empfängerarray kann ein Zeilensensor oder auch ein zweidimensionaler Matrixsensor sein, die in CCD- oder CMOS-Bauweise realisiert sein können.

Der Codeleser 10 könnte auch als Kamera aufgebaut sein. In diesem Fall könnte der Codeleser lediglich einen Lichtempfänger 24 und keinen Lichtsender 12 aufweisen. Die Beleuchtung der Codes kann durch eine externe Beleuchtung realisiert ein.

Die dem empfangenen Licht entsprechenden elektronischen Signale werden einer Auswerteeinheit 30 zugeführt, in der eine Dekodierung des Codes 20 bzw. 22 vorgenommen wird, also die Codes gelesen werden. Die in dem Code 20 bzw. 22 enthaltene Information kann über eine Schnittstelle 32 ausgegeben werden.

Wenn ein Code nicht gelesen werden kann, werden die elektronischen Signale einer Bilderzeugungseinheit 34 zugeleitet, in der ein Bild des vom Sensor 10 gesehenen Codes 20 bzw. 22 erzeugt wird. Selbstverständlich könnte prinzipiell auch bei korrekter Lesung eines Codes ein Bild erzeugt werden, wenn dies in einer speziellen Anwendung erwünscht ist.

Das erzeugte Bild wird erfindungsgemäß einer Bildkompressionseinrichtung 36 zugeführt, in der das Bild mit Hilfe eines Kompressionsalgorithmus komprimiert wird. Die unter der Bezeichnung JPEG oder JPEG 2000 bekannten Algorithmen haben sich in bisherigen Versuchen als vorteilhaft gezeigt.

Das komprimierte Bild kann entweder ausgegeben werden, beispielsweise über die Schnittstelle 32 oder aber in einem Speicher 38 gespeichert werden und so ggf. zu einem späteren Zeitpunkt über die Schnittstelle 32 ausgelesen werden.

Der Speicher 38 kann ein sensorinterner Speicher sein, in dem die Daten beispielsweise temporärer (RAM) oder aber dauerhaft (Flash-Prom) speicherbar sind. Alternativ kann der Speicher sensorextern, beispielsweise als Harddisk, vorgesehen sein. In einer weiteren Alternative kann der Speicher 38 als "first-in firstout" Speicher aufgebaut sein, so dass bei vollem Speicher zum Speichern des aktuellen, komprimierten Bildes, jeweils das älteste der bereits abgespeicherten Bilder überschrieben wird. Auf diese Weise lassen sich immer die zuletzt gesehenen Bilder speichern.

Die Schnittstelle kann beliebig, z.B. seriell, parallel, asynchron, ausgebildet sein. Es können verschiedene Protokolle, z.B. Ethernet, TCP/IP o.dgl., eingesetzt werden.

Die Bilder, die einer Fehllesung entsprechen, können wie erwähnt über die Schnittstelle 32 ausgelesen und in einer Fehlerdiagnoseeinrichtung 40 eingelesen werden. Die Fehlerdiagnoseeinrichtung 40 kann sensorintern oder sensorextern vorgesehen sein. Insbesondere ist eine Ferndiagnose, beispielsweise über das Internet, denkbar.

In der Fehlerdiagnoseeinrichtung 40 werden die komprimierten Bilder untersucht und der Fehler diagnostiziert, um gegebenenfalls Änderungen zur Verbesserung der Erkennungsrate ableiten zu können.

## Patentansprüche

1. Verfahren zum Betrieb eines optischen Sensors (10), insbesondere eines Codelesers, bei dem reflektiertes und/oder remittiertes Licht (26) von einem Lichtempfänger (24) empfangen wird und entsprechend dem empfangenen Licht ein Bild erzeugt wird, der Inhalt des Bildes (Code) gelesen wird und wenigstens einige der Bilder mit einem Bildkompressionsalgorithmus in dem Sensor (10) komprimiert werden, **dadurch gekennzeichnet, dass** nur Bilder komprimiert und abgespeichert werden, die einer Fehllesung entsprechen.

2. Verfahren nach Anspruch 1 **dadurch gekennzeichnet, dass** die komprimierten Bilder ein zu lesendes Objekt (Code) und eine Umgebung des Objektes enthalten.

3. Verfahren nach einem der vorhergehenden Ansprüche, **dadurch gekennzeichnet, dass** die Bilder temporär in dem Sensor (10) abgespeichert werden.

4. Verfahren nach einem der vorhergehenden Ansprüche, **dadurch gekennzeichnet, dass** die Bilder dauerhaft in dem Sensor (10) abgespeichert werden.

5. Verfahren nach einem der vorhergehenden Ansprüche, **dadurch gekennzeichnet, dass** bei vollem Speicher (38) zum Speichern des aktuellen, komprimierten Bildes, jeweils das älteste der abgespeicherten Bilder überschrieben wird.

6. Verfahren nach einem der vorhergehenden Ansprüche, **dadurch gekennzeichnet, dass** die komprimierten Bilder über Fernwartung abrufbar sind.

7. Verfahren nach einem der vorhergehenden Ansprüche, **dadurch gekennzeichnet, dass** als Kompressionsverfahren ein unter der Bezeichnung JPEG oder JPEG 2000 bekanntes Kompressionsverfahren eingesetzt wird.

8. Verfahren nach einem der vorhergehenden Ansprüche, **dadurch gekennzeichnet, dass** der Kompressionsgrad eingestellt werden kann.

9. Verfahren nach einem der vorhergehenden Ansprüche, **dadurch gekennzeichnet, dass** der Kompressionsgrad in Abhängigkeit bestimmter Parameter selbsttätig von dem Sensor bestimmt wird.

10. Verfahren nach einem der vorhergehenden Ansprüche, **dadurch gekennzeichnet, dass** der Kompressionsgrad bei offensichtlichen Fehlern etwa 50 beträgt, bei detailreichen Bildern und/oder Diagnose von Detailfehlern etwa 20 oder darunter.

11. Verfahren nach einem der vorhergehenden Ansprüche, **dadurch gekennzeichnet, dass** die Bilder, die einer Fehllesung entsprechen, einer Fehlerdiagnoseeinrichtung (40) zugeführt werden, in der Lesefehler diagnostizierbar sind.

12. Codeleser mit einer Lichtempfangseinrichtung (24), einer Bilderzeugungseinrichtung (34), einer Auswerteeinheit (30) zum Lesen des Bildinhalts und einer Bildkompressionseinrichtung (36), **gekennzeichnet durch** eine Fehlerdiagnoseeinrichtung (40) in der falsch gelesene und komprimierte Bilder auswertbar sind.

13. Codeleser nach Anspruch 12, **dadurch gekennzeichnet, dass** Speichermittel (38) vorgesehen sind zum Speichern der komprimierten Bilder.

## Claims

1. Method for operating an optical sensor (10), especially a codereader, comprising:
receiving reflected and/or remitted light (26) by a light receptor (24), generating an image according to the light received, reading the content of the image (code) and compressing at least some of the images with a compression algorithm in the sensor (10), **characterized in that** only images are stored and compressed which correspond to an error reading.

2. Method according to claim 1 **characterized in that** the compressed images include an object (code) to read and information about surroundings of the object.

3. Method according to one of the preceding claims **characterized in that** the images are temporarily stored in the sensor (10).

4. Method according to one of the preceding claims **characterized in that** the images are permanently stored in the sensor (10).

5. Method according to one of the preceding claims **characterized in that** if the memory is full the oldest of the previously stored images will be overwritten for storage of the most recent, compressed image.

6. Method according to one of the preceding claims **characterized in that** the compressed images are accessible from a location remote from the sensor.

7. Method according to one of the preceding claims **characterized in that** the images are compressed with at least one of compression techniques identified as JPEG and JPEG 2000.

8. Method according to one of the preceding claims **characterized in that** the degree of compression to which the images are compressed is adjustable.

9. Method according to one of the preceding claims **characterized in that** the degree of compression is automatically adjustable with the sensor in dependence on predetermined parameters.

10. Method according to one of the preceding claims **characterized in that** the degree of compression is about 50:1 for obvious errors and it is about 20:1 or less for detailed images and/or for analyzing detailed errors.

11. Method according to one of the preceding claims **characterized in that** the images with error reading are transferred to an error diagnosing unit (40) in which the reading errors are diagnosable.

12. Code reader comprising a light receptor (24), an image generator (34), a processing unit (30) for reading a content of the image and an image compression unit (36), **characterized by** an error diagnosing unit (40) in which compressed images corresponding to error readings are processed.

13. Code reader according to claim 12 **characterized in that** a memory (38) for storing the compressed images is included.

## Revendications

1. Procédé d'utilisation d'un capteur optique (10), notamment d'un lecteur de code, dans lequel de la lumière (26) réfléchie et/ou renvoyée est reçue par un récepteur de lumière (24), et une image est générée en fonction de la lumière reçue, le contenu de l'image (code) étant lu, et quelques-unes au moins des images étant compressées dans le capteur (10) avec un algorithme de compression d'images, **caractérisé en ce que** seules des images correspondant à une lecture erronée sont compressées et mémorisées.

2. Procédé selon la revendication 1, **caractérisé en ce que** les images compressées contiennent un objet (code) à lire, et un environnement de l'objet.

3. Procédé selon l'une des revendications précédentes, **caractérisé en ce que** les images sont mémorisées temporairement dans le capteur (10).

4. Procédé selon l'une des revendications précédentes, **caractérisé en ce que** les images sont mémorisées de façon permanente dans le capteur (10).

5. Procédé selon l'une des revendications précédentes, **caractérisé en ce que**, lorsque la mémoire (38) est pleine, la plus ancienne des images mémorisées est écrasée pour la mémorisation de l'image compressée actuelle.

6. Procédé selon l'une des revendications précédentes, **caractérisé en ce que** les images compressées peuvent être appelées par l'intermédiaire d'un service de télésurveillance.

7. Procédé selon l'une des revendications précédentes, **caractérisé en ce qu'**un procédé de compression connu sous la désignation JPEG ou JPEG 2000 est utilisé en tant que procédé de compression.

8. Procédé selon l'une des revendications précédentes, **caractérisé en ce que** le degré de compression peut être réglé.

9. Procédé selon l'une des revendications précédentes, **caractérisé en ce que** le degré de compression est déterminé automatiquement par le capteur en fonction de certains paramètres.

10. Procédé selon l'une des revendications précédentes, **caractérisé en ce que** le degré de compression est de l'ordre de 50 en cas de défauts évidents, et de l'ordre de 20 ou en-dessous en cas d'images riches en détails et/ou de diagnostic de défauts de détails.

11. Procédé selon l'une des revendications précédentes, **caractérisé en ce que** les images qui correspondent à une lecture erronée sont transmises à un dispositif de diagnostic d'erreur (40), dans lequel peuvent être diagnostiquées des erreurs de lecture.

12. Lecteur de code comportant un dispositif de réception de lumière (24), un dispositif de génération d'images (34), une unité d'évaluation (30) pour la lecture du contenu d'image et un dispositif de compression d'images (36), **caractérisé par** un dispositif de diagnostic d'erreur (40), dans lequel peuvent être évaluées des images lues de façon erronée et compressées.

13. Lecteur de code selon la revendication 12, **caractérisé en ce que** des moyens de mémorisation (38) sont prévus pour la mémorisation des images compressées.
